Europäisches Patentamt

European Patent Office

Office européen des brevets

(11) Veröffentlichungsnummer: **0 305 606 B1**

(19)

(12) **EUROPÄISCHE PATENTSCHRIFT**

(45) Veröffentlichungstag der Patentschrift: **04.03.92**

(51) Int. Cl.⁵: **B01D 24/46**

(21) Anmeldenummer: **87201874.2**

(22) Anmeldetag: **19.09.87**

(54) **Rückspülbare Filteranlage.**

(30) Priorität: **01.09.87 CH 3346/87**

(43) Veröffentlichungstag der Anmeldung:
**08.03.89 Patentblatt  89/10**

(45) Bekanntmachung des Hinweises auf die
Patenterteilung:
**04.03.92 Patentblatt  92/10**

(84) Benannte Vertragsstaaten:
**AT BE DE ES FR GB IT LU NL SE**

(56) Entgegenhaltungen:
**DE-A- 1 033 183**
**GB-A- 2 118 452**
**US-A- 2 888 140**
**US-A- 4 076 625**
**US-A- 4 478 726**

(73) Patentinhaber: **GEBRÜDER SULZER AKTIENGE-**
**SELLSCHAFT**
**Zürcherstrasse 9**
**CH-8401 Winterthur(CH)**

(72) Erfinder: **Keller, Ernst**
**Wallrütistrasse 119**
**CH-8404 Winterthur(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine rückspülbare Filteranlage für die Aufbereitung von Wässern mit mindestens einem Festbett aus körnigem Material und einem Ueberstauraum für das zu filtrierende Wasser, wobei aus dem Ueberstauraum durch eine Seitenwand ein mit einer Schlammwasserklappe verschliessbarer Schlitz in einen Schlammwasserablaufkanal für die Rückspülflüssigkeit führt, wobei ferner der Klappenflügel der Schlammwasserklappe in der dem Ueberstauraum zugewandten Fläche der Seitenwand eingelassen und um eine Achse aufklappbar ist, die einerseits mindestens annähernd auf der oberen Niveauhöhe des Festbettes und andererseits entlang dem unteren Rand des Klappenflügels verläuft.

Eine Filteranlage der vorstehend geschilderten Art ist bekannt aus der EP-B-29 468. Eine solche Anlage, die im Filtrationsbetrieb von oben nach unten durchströmt wird, wird im Gegenstrom dazu von unten nach oben rückgespült. Bei der bekannten Dreiphasen-Rückspülung wird in der
- ersten Phase mit Luft allein, in der
- zweiten Phase mit Luft und Wasser und in der
- dritten Phase mit Wasser allein rückgespült.

Die ersten Phase dient dabei dem Auflockern der körnigen Filtermasse. Während der zweiten Phase werden die an der Filtermasse haftenden Schwebestoffe vom Filterkorn gelöst und in der dritten Phase die abgelösten Schwebestoffe aus der Filtermasse ausgetragen.

In der zweiten Phase einer derartigen Spülung erfolgt ein intensives Aufwirbeln der körnigen Filtermasse; bei gleichzeitigem Ablassen des Schlammwassers besteht daher die Gefahr, dass nicht nur die abgelösten Schwebestoffe, sondern auch Filtermaterial aus dem Filterbett ausgetragen werden.

Um dies zu verhindern, ist die Aufstauspülung bekannt, bei der das aus der Filtermasse nach oben austretende Schlammwasser solange kumuliert wird, bis die Zufuhr der Spülmedien unterbrochen ist. Erst dann erfolgt ein Ablassen des Schlammwassers über eine Schlammwasserklappe. In manchen Fällen, vor allem bei der Abwasserfiltration, ist es erwünscht, auch die zweite, kombinierte Phase der Luft-Wasser-Spülung bei geöffneter Schlammwasserklappe durchzuführen, um beispielsweise entweder relativ schwere Schwebestoffe mit dem Schlammwasser auszutragen oder einen Spülvorgang in möglichst kurzer Zeit ablaufen zu lassen.

Darüber hinaus ist aus der DE-A-1 033 183 eine Vorrichtung zum Abscheiden körnigen Filtermaterials beim Rückspülen von Filtern bekannt. Dort wird eine im Schnitt zick-zack-förmige Vorrichtung offenbart, die eine Entlüftung für sich ansammelnde Luft in Kamm der nach oben gerichteten Zacke, einen Schlitz im Sohlenbereich der nach unten gerichteten Zacke zur Abführung des sich dort angesammelten körnigen Filtermaterials und eine Abschirmung vor dem genannten Schlitz gegen den Durchtritt von aufsteigenden Gasblasen aufweist.

Aufgabe der Erfindung ist es, eine Filteranlage der eingangs genannten Art derart weiterzubilden, daß eine Luft-Wasser-Spülphase praktisch ohne Verlust an Filtermaterial durchgeführt werden kann.

Erfindungsgemäss wird diese Aufgabe gelöst durch eine im Ueberstauraum einen Teil der Festbettoberfläche abdeckende, wellenförmige Anordnung, an deren klappenseitigem Ende die Schlammwasserklappe, wenn teilweise geöffnet, an eine Dichtung anlegbar ist, wobei in den Wellenkämmen Entlüftungsleitungen und in den Wellentälern Durchtrittsöffnungen für das könige Festbettmaterial vorhanden sind, die durch im Abstand davor angeordnete Abschirmungen gegen den Durchtritt aufsteigender Gasblasen abgeschirmt sind.

Durch die neue Anordnung, mit der ein direktes Ausströmen des Spülwassers aus der teilweise geöffneten Schlammwasserklappe während der Luft-Wasser-Spülphase verhindert wird, wird der Fluss des Spülwassers verlangsamt und beruhigt. Damit haben die aufgewirbelten Partikel des körnigen Filtermaterials Zeit aus dem ausfliessenden Spülwasser durch Absinken auszuscheiden, so dass sie von diesem Fluss nicht mehr in den Schlammwasserablaufkanal mitgerissen werden.

Eine Verbesserung der Beruhigung der Strömung des abfliessenden Spülwassers und damit ein verbessertes Absetzen der Partikel lässt sich erreichen, wenn auf dem klappenseitigen Wellenkamm eine Frontwand vorgesehen ist. Zur Vermeidung von unvollkommenen Ueberfällen der Wasseroberfläche an den Stellen, wo die Wellenkämme sich unterhalb des Wasserspiegels befinden, ist es vorteilhaft, wenn die wellenförmige Anordnung zur Schlammwasserklappe hin gegen die Horizontale ansteigend geneigt ist, wobei die Steigung - abhängig von der Korngrösse und dem spezifischen Gewicht des körnigen Filtermaterials - 3° bis 12° betragen kann.

Da Korngrösse und spezifisches Gewicht des Filtermaterials die entscheidenden Parameter für die Absetzgeschwindigkeit des Materials sind, beeinflussen sie auch die Höhe und die Anzahl der Wellenkämme; bei den handelsüblichen Filtermaterialien haben sich experimentell für die Höhe zwischen einem Wellenkamm und einem Wellental Wert von 100 bis 150 mm als zweckmässig erwiesen, während Versuche als sinnvolle Anzahl von Wellenkämmen drei bis sechs Wellenkämme ergeben haben. Bei allen Versuchen hat sich gezeigt, dass für die Volumenströme des abfliessenden Spülwassers Schwellenwerte bis zu 100 m$^3$ pro Stunde und Meter Filterbreite zulässig sind, wenn ein Absetzen des körnigen Materials erreicht werden soll, bevor das Spülwasser aus dem Ueberstauraum abfliesst.

Im folgenden wird die Erfindung anhand eines Ausführungsbeispiels im Zusammenhang mit der Zeichnung näher erläutert.

Fig. 1     zeigt einen Längsschnitt durch ein Festbett einer rückspülbaren Filteranlage;

Fig. 2     gibt vergrössert die Vorrichtung und deren Anordnung gegenüber der Schlammwasserklappe wieder.

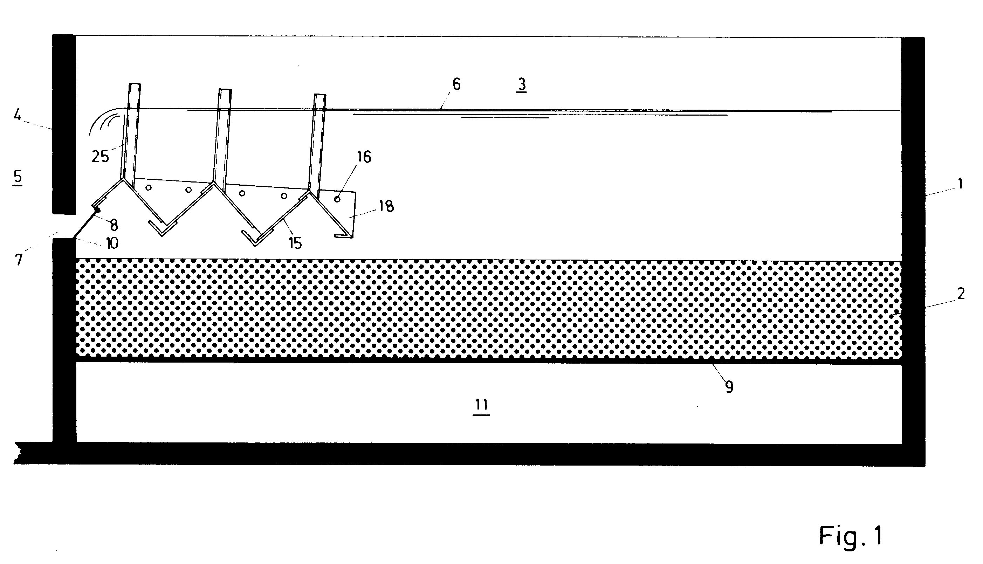

Eine rückspülbare Filteranlage enthält üblicherweise mindestens ein im allgemein aus Beton gefertiges Becken 1 (Fig. 1), in dem auf einem Zwischenboden 9 ein aus körnigem Material bestehendes Festbett 2 vorhanden ist, unter dem der Reinwasserraum 11 für die Aufnehme des Filtrats angeordnet ist. Der Innenraum über dem Festbett 2 bildet den Ueberstauraum 3 für das zu filtrierende Roh- bzw. - beim Rückspülen - für das Schlammwasser, dessen Niveau mit 6 bezeichnet ist. Eine innere Seitenwand 4 trennt im Becken 1 das Festbett 2 und den Ueberstauraum 3 von einem Schlammwasserablaufkanal 5, durch den die beim Rückspülen aus dem Festbett entfernten Verunreinigungen mit dem Schlammwasser weggeführt werden.

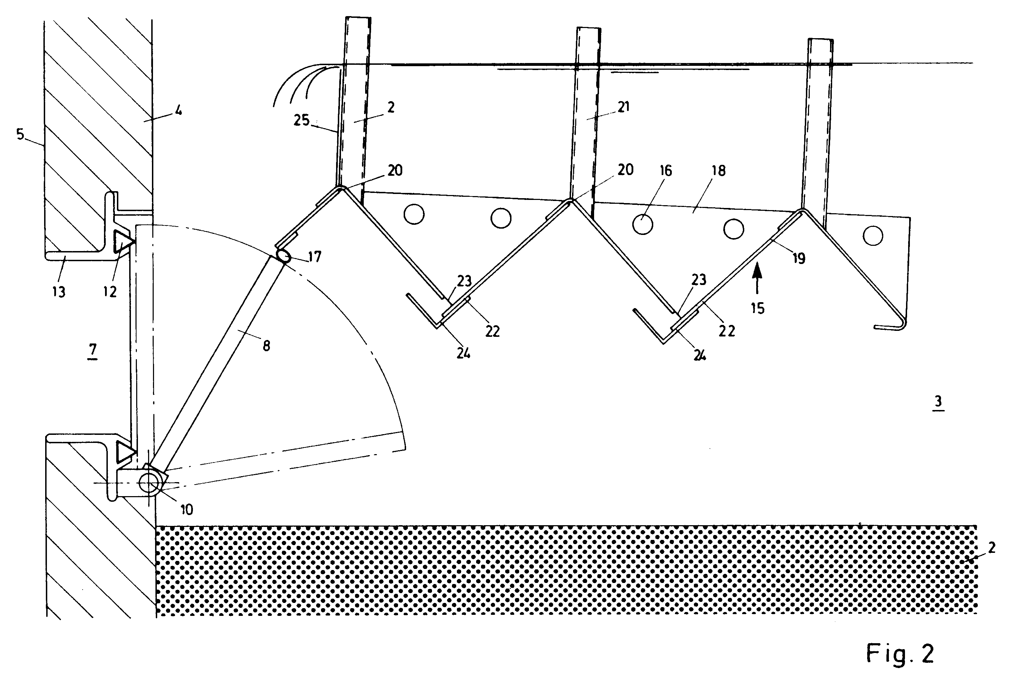

Ein Schlitz 7, der über die ganze Breite des Beckens 1 in der Seitenwand 4 verläuft, verbindet den Ueberstauraum 3 mit dem Schlammwasserablaufkanal 5. Der Schlitz 7 ist durch eine Schlammwasserklappe 8 absperrbar, die in der dem Ueberstauraum 3 zugewandten Fläche der Seitenwand 4 gelegen ist. Die Klappe 8 ist scharnierartig um eine Achse 10 (Fig. 2) drehbar, die einerseits annähernd auf der Niveauhöhe des Festbetts 2 - der Abstand zwischen der Niveauhöhe und der Unterkante des Schlitzes 2 beträgt beispielsweise 50 mm - und andererseits entlang der unteren Längskante der Klappe 8 angeordnet ist.

Bei geschlossener Schlammwasserklappe 8 leigt ihr Klappenflügel an einer Dichtung 12 an, die in einem Dichtungsrahmen 13 gehalten den Schlitz 7 umgibt.

Ebenfalls über die ganze Breite des Beckens 1 erstreckt sich die erfindungsgemässe Anordnung 15; sie ist seitlich durch Abschlusswände 18 begrenzt und mit diesen durch Schrauben 16 an den Seitenwänden des Beckens 1 befestigt. Relativ zu der Schlammwasserklappe 8 ist die Anordnung 15 so im Becken 1 plaziert, dass eine Dichtung 17 an ihrem klappenseitigen Ende mit der teilweise geöffneten Klappe 8 eine mindestens weitgehend strömungsdichte Abschirmung für das unter der Anordnung 15 aufgewirbelte, mit körnigem Filtermaterial durchsetzte Spülwasser bildet, so dass ein direkter Schlammwasserablauf unterhalb der Vorrichtung während der Luft-Wasser-Spülphase verhindert wird.

Die neue Anordnung besteht aus mindestens drei aneinander gereihten Abkantprofilen 19, beispielsweise aus Blech oder Kunststoff, die an den Enden auf die Abschlusswände 18 beispielsweise aufgeschweisst sind. Im Schnitt bilden die Profile 19 eine Wellenlinie, deren Wellenkämme 20 je mit einem Entlüftungsrohr 21 für die Ableitung der unterhalb der Anordnung 15 aus der Filtermasse 2 austretende Spülluft ausgerüstet sind. Weiterhin trägt der klappenseitig erste Wellenkann 20 eine Frontwand 25, die eine Ueberlaufkante für das abfliessende Spülwasser bildet und eine Beruhigung des Spülwasserstromes bewirkt, so dass sich die in ihm mitgerissenen Filterkörner absetzen könne.

In den Wellentälern 22 sind schlitzförmige Oeffnungen 23 vorgesehen, durch die auf den Profilen 19 abgelagerte Körner des Filtermaterials auf das Festbett 2 zurückgeführt werden, wenn beim weiteren Oeffnen der Klappe 8 im Verlauf des Spülvorganges der Spülwasserspiegel über dem Festbett 2 sinkt. Im Abstand vor den Oeffnungen 23 angebrachte Abschirmungen 24, die einen syphonartigen Verschluss bilden, verhindern einen Luftaustritt durch die Schlitze 23, der ein erneutes Hochwirbeln von abgesetzten Filterkörnern zur Folge haben könnte.

Die Anordnung 15 ist in Strömungsrichtung des auslaufenden Schlammwassers gegenüber der Horizontalen schräg ansteigend angeordnet, um unvollkommene Ueberfälle an den untergetauchten Wellenkämmen 20 zu vermeiden. Die Steigung beträgt im vorliegenden Beispiel etwa 4°; sie ist - ebenso wie die Gesamtlänge der Vorrichtung - von der Granulometrie und dem spezifischen Gewicht der eingesetzten Filtermasse abhängig.

Mit der neuen Anordnung 15 kann die mit Luft und Wasser durchgeführte zweite Phase einer Dreiphasen-Spülung beispielsweise so ablaufen, dass die Schlammwasserklappe teilweise geöffnet wird, bis sie an der Dichtung 17 anleigt. Die neue Anordnung 15 hat dann eine zweifache Wirkung. Zum einen können die unter ihr durch den Luft-Wasser-Strom aufgewirbelten Filterkörner nicht in den Schlammwasserablauf 5 gelangen, so dass sie wieder absinken. Zum anderen muss das Schlammwasser, das aus dem durch die Anordnung 15 nicht abgedeckten Teil der Filtermasse 2 austritt, vor dem Verlassen des Filterbeckens 1 die Anordnung 15 überströmen, wobei es zusätzlich durch die Frontwand 25 aufgestaut und in seiner Strömung beruhigt wird. Dabei wirkt die Anordnung 15 als Sandfang, d.h. mit dem Schlammwasser mitgeführte Filterkörner werden auf ihr abgelagert und fallen durch die Schlitze 23 zunächst in die Rinnen 24.

Haben sich die Filterkörner abgesetzt, so wird die Klappe 8 allmählich, z.B. schrittweise, weiter geöffnet, so dass das Spülwasser durch den Schlitz 7 abfliessen kann; mit sinkendem Wasserspiegel wird dabei das in den Rinnen 24 gefangene körnige Material auf das Festbett 2 zurückgeschwemmt, ohne dass nennenswerte Mengen in den Schlammwasserablaufkanal 5 gelangen und damit verloren gehen.

**Patentansprüche**

1. Rückspülbare Filteranlage für die Aufbereitung von Wässern mit mindestens einem Festbett aus körnigem Material und einem Ueberstauraum für das zu filtrierende Wasser, wobei aus dem Ueberstauraum durch eine Seitenwand ein mit einer Schlammwasserklappe verschliessbarer Schlitz in einen Schlammwasserablaufkanal für die Rückspülflüssigkeit führt, wobei ferner der Klappenflügel der Schlammwasserklappe in der dem Ueberstauraum zugewandten Fläche der Seitenwand eingelassen und um eine Achse aufklappbar ist, die einerseits mindestens annähernd auf der oberen Niveauhöhe des Festbettes und andererseits entlang dem unteren Rand des Klappenflügels verläuft, gekennzeichnet durch eine im Ueberstauraum (3) einen Teil der Festbettoberfläche abdeckende, wellenförmige Anordnung (15), an deren klappenseitigem Ende die Schlammwasserklappe (8), wenn teilweise geöffnet, an eine Dichtung (17) anlegbar ist, wobei in den Wellenkämmen (20) Entlüftungsleitungen (21) und in den Wellentälern (22) Durchtrittsöffnungen (23) für das körnige Festbettmaterial vorhanden sind, die durch im Abstand davor angeodnete Abschirmungen (24) gegen den Durchtritt aufsteigender Gasblasen abgeschirmt sind.

2. Filteranlage nach Anspruch 1, dadurch gekennzeichnet, dass auf dem klappenseitigen Wellenkamm (20) eine Frontwand (25) vorgesehen ist.

3. Filteranlage nach Anspruch 1, dadurch gekennzeichnet, dass die wellenförmige Anordnung (15) zur Schlammwasserklappe (8) hin gegen die Horizontale ansteigend geneigt ist.

4. Filteranlage nach Anspruch 3, dadurch gekennzeichnet, dass die Steigung 3° bis 12° beträgt.

5. Filteranlage nach einem der Ansprüche 1 bis 4, dadurch gekennzeichnet, dass die Höhe zwischen einem Wellenkamm (20) und einem Wellental (22) 100 bis 150 mm beträgt.

6. Filteranlage nach Anspruch 5, dadurch gekennzeichnet, dass die wellenförmige Anordnung (15) drei bis sechs Wellenkämme (20) enthält.

**Claims**

1. A backwashing water treatment filter installation having at least one solid bed of granular material and a flood chamber for the water to be filtered, a slot which is closable by a sludge liquor valve conveying the backwashing liquid from the flood chamber through a side wall into a sludge liquor discharge duct, the flap of such valve being received in the side wall surface near the flood chamber and being upwardly hingeable around a pivot disposed substantially at the top level of the solid bed and extending along the bottom edge of the valve flap, characterised by a wavy arrangement (15) which covers some of the solid bed surface in the flood chamber (3), the valve (8) being engageable when partly open with a seal (17) at the valve-side end of the arrangement (15), venting lines (21) being disposed in the wave crests (20) and orifices (23) for the granular solid bed material being present in the wave troughs (22), baffles (24) which are disposed before and at a distance from the orifices (23) inhibiting the passage therethrough of rising gas bubbles.

2. An installation according to claim 1, characterised in that a front wall (25) is provided on the crest (20) nearest the valve (8).

3. An installation according to claim 1, characterised in that the wavy arrangement (15) is arranged at a rising inclination to the horizontal towards the valve (8).

4. An installation according to claim 3, characterised in that the inclination is from 3° to 12°.

5. An installation according to any of claims 1 to 4, characterised in that the height between a crest (20) and a trough (25) is from 100 to 150 mm.

6. An installation according to claim 5, characterised in that the wavy arrangement (5) has from three to six crests (20).

## Revendications

1. Installation de filtration à lavage à contre--courant pour le traitement des eaux, comprenant au moins un lit fixe de matière granulaire et une chambre de submersion pour l'eau à filtrer, une fente obturable par un clapet de passage de l'eau boueuse menant de la chambre de submersion à travers une paroi latérale dans un canal d'évacuation d'eau boueuse destiné au liquide de lavage à contre-courant et, par ailleurs, la palette du clapet de retenue de l'eau boueuse se logeant dans la surface de la paroi latérale qui est tournée vers la chambre de submersion et étant rabattable en position ouverte autour d'un axe qui d'une part est disposé au moins approximativement au niveau supérieur du lit fixe et d'autre part le long du bord inférieur de la palette du clapet, caractérisée par une structure onduleuse (15) disposée dans la chambre de submersion (3), recouvrant une partie de la surface du lit fixe et à l'extrémité côté clapet de laquelle le clapet (8) de passage de l'eau boueuse peut s'appliquer contre une garniture d'étanchéité (17) lorsqu'il est partiellement ouvert, des conduites (21) de purge d'air étant prévues aux sommets (20) des ondulations et des trous (23) de passage de la matière granulaire du lit fixe étant prévus dans les fonds (22) des ondulations, des écrans (24) disposés à distance devant ces trous empêchant le passage par ces derniers des bulles ascendantes de gaz.

2. Installation de filtration selon la revendication 1, caractérisée en ce qu'une paroi antérieure (25) est prévue sur le sommet (20) de l'ondulation située du côté du clapet.

3. Installation de filtration selon la revendication 1, caractérisée en ce que la structure onduleuse (15) est inclinée sur l'horizontale de manière à être ascendante vers le clapet (8) de retenue de l'eau boueuse.

4. Installation de filtration selon la revendication 3, caractérisée en ce que la pente est de 3° à 12°.

5. Installation de filtration selon l'une des revendications 1 à 4, caractérisée en ce que la hauteur entre un sommet (20) et un fond (22) d'une ondulation est de 100 à 150 mm.

6. Installation de filtration selon la revendication 5, caractérisée en ce que la structure onduleuse (15) comprend trois à six sommets (20) d'ondulations.

Fig. 1

EP 0 305 606 B1

Fig. 2

EP 0 305 606 B1